# EUROPEAN PATENT APPLICATION

(11) **EP 2 527 219 A1**
(43) Date of publication of application: **28.11.2012**
(21) Application number: 10843156.0
(22) Date of filing: 13.12.2010
(51) Int. Cl.: B60W 10/10, B60K 6/445, B60K 6/547, B60L 11/14, B60W 10/08, B60W 20/00, E02F 9/20, E02F 9/22

(54) **DRIVE CONTROL DEVICE FOR WORKING VEHICLE**

(30) Priority: 18.01.2010 JP 2010008099
(71) Applicant: Hitachi Construction Machinery Co., Ltd., Bunkyo-ku, Tokyo 112-8563 (JP)
(72) Inventor: KANEKO Satoru, Hitachi-shi Ibaraki 319-1292 (JP); IKIMI Takashi, Tsuchiura-shi Ibaraki 300-0013 (JP); MORIKI Hidekazu, Hitachinaka-shi Ibaraki 312-0034 (JP); ITO Noritaka, Tokyo 105-0003 (JP)
(74) Representative: Beetz & Partner
(86) International application number: PCT/JP2010/072415
(87) International publication number: WO 2011/086801

(57) **Abstract**

Provided is a drive control device for a working vehicle, this device controlling motive power to be virtually invariant, even during switching of traveling drive devices, and having high-efficiency characteristics.

The working vehicle has a first traveling drive device 12 including an engine 1, an electric power generator 2, a hydraulic pump 11, a torque converter 5, and a transmission 6, and a second traveling drive device 13 for driving an electric motor 8 to make the vehicle travel. Driving-force switching means 20A2 switches the first traveling drive device 12 and the second traveling drive device 13. A traveling means switcher 20A2 selects one of the two traveling drive devices, depending upon a traveling speed of the vehicle, so as to make the vehicle travel while being driven in a high-speed region with the first traveling drive device and in a low-speed region with the second traveling drive device.

## Description

### Technical Field

The present invention relates generally to drive control devices for working vehicles, and more particularly, to a drive control device for a working vehicle, preferred for controlling a working vehicle that employs a hybrid system.

### Background Art

In recent years, trends towards less energy consumption in industrial products are increasing in terms of environmental problems and soaring crude-oil prices. These tendencies are also found in the field of the conventional construction vehicles and working vehicles that employ hydraulic drive systems based primarily upon diesel engines. Under these circumstances, cases of using electric motors for enhanced efficiency and reduced energy consumption are increasing.

Energy-saving effects such as more efficient engine driving (in hybrid specifications), improved motive-power transmitting efficiency, and enhanced recoverability of regenerative electrical energy, as well as a decrease in exhaust emissions, are anticipated from constructing the drive section of a vehicle using a motor, that is, from using an electric motor as a motive power source. In the field of the construction vehicles and working vehicles mentioned above, motorized forklift trucks, especially "battery-powered forklift trucks" that use the electric energy of a battery to drive a motor, are already commercialized earlier than any other vehicles. Following these forklift trucks, recently, "hybrid vehicles" with a diesel engine and an electric motor in combination are coming to be commercialized for use as hydraulic excavators, engine-powered forklift trucks, and the like.

Among these construction machines and working vehicles incorporating various advanced environmental design considerations, wheel loaders are available as other vehicles expected to exhibit relatively significant effectiveness for the outcome of hybridization. Wheel loaders are working vehicles that use the bucket of the hydraulic working implement on a front section of the vehicle to carry soil/sediments and the like while transmitting engine motive power to tires via a torque converter and a transmission (T/M) during traveling. Since wheel loaders repeat starts/stops of their traveling operation very frequently during working, motorizing a traveling drive section is expected to efficiently recover regenerative braking electrical energy from the driving motor.

In some of the hybrid systems used in these working vehicles, a drive unit of the working vehicle is known to include two units, one with axles mechanically coupled to an engine, and the other with a hydraulic pump (or an electric power generator) and a hydraulic motor (or a motor), and use the two units to drive the axles for traveling. The drive unit is described in, for example, Patent Document 1 (see below). The two units, which differ in motive-power transmitting efficiency, enable the drive unit to improve traveling efficiency of the vehicle by selectively using one of the two units, depending upon a speed region of the vehicle.

### Related Art Literature

### Patent Documents

Patent Document 1
   JP-H06(1994)-211061-A

### Summary of the Invention

### Problems to be Solved by the Invention

Patent Document 1, however, does not detail a method of actual switching between the two units that occurs during vehicle traveling. It is not easy to switch two units of different drive system configurations smoothly without causing variations in the motive power transmitted of a drive shaft, or in engine motive power. In particular, if one of the two traveling drive units uses a torque converter, since torque characteristics of the torque converter are unequivocally determined by an input/output speed ratio, switching to the torque converter driving scheme when the engine is already running in a near-rated speed region, as with that of such a wheel loader as discussed earlier, is considered to significantly fluctuate driving force because of the hydraulic working implement located on the front section of the vehicle.

An object of the present invention is to provide a hybrid traveling drive control device for a working vehicle equipped with a hydraulic working implement on a front section of the vehicle such as a wheel loader, a traveling drive device using a torque converter, and a traveling drive device using an electric motor; the traveling drive control device for the working vehicle being kept substantially free of a variation in motive power, even during switching of the traveling drive devices, and having high-efficiency characteristics.

### Means for Solving the Problems

(1) In order to attain the above object, a drive control device according to the present invention, used for a working vehicle equipped with an engine, an electric power generator driven by the engine, a hydraulic pump driven by the engine and serving as a driving source for a hydraulic working implement provided on a front section of the vehicle, a first traveling drive device for transmitting motive power of the engine to a driving wheel via a torque converter and
a transmission so as to make the vehicle travel, and a second traveling drive device for driving an electric motor by means of the generator-output electric power so as to make the vehicle travel, the drive control device comprising: driving-force switching means for switching a driving force between the first traveling drive device and the second traveling drive device; wherein the driving-force switching means includes a traveling means switcher for selecting, depending upon a traveling speed of the vehicle, one of the two traveling drive devices so as to make the vehicle travel while being driven in a high-speed region with the first traveling drive device and in a low-speed region with the second traveling drive device.
This configuration of the hybrid traveling drive control device for a working vehicle equipped with a hydraulic working implement on a front section of the vehicle such as a wheel loader, a traveling drive device using a torque converter, and a traveling drive device using an electric motor, makes the hybrid traveling drive control device substantially free of a variation in motive power, even during the switching of the traveling drive devices, and provides high-efficiency characteristics.

(2) In above item (1), when the traveling means switcher conducts switching from the second traveling drive device to the first traveling drive device, the switcher uses the electric power generator to control at least a rotational speed of the engine, torque of the motor, and a flow rate of a fluid from the hydraulic pump, for suppressed variations in the rotational speed of the engine, in travel driving force of the working vehicle, and in driving force of the working implement.

(3) In item (1), preferably the driving-force switching means further includes an operational state detector, and the operational state detector detects a current operating point of travel driving, operating point of the engine, and motive power of the working implement, based upon information relating to at least an accelerator pedal opening angle, a brake pedal opening angle, a control lever actuating quantity for the working implement, a pressure and flow rate of the fluid from the hydraulic pump, a rotational speed of the engine, a rotational speed and torque of the motor, and the speed of the vehicle.

(4) In item (1), preferably the drive control device further comprises an electricity storage device for storage of traveling regenerative electrical energy output from the motor, as well as the electrical energy output from the electric power generator; the storage device optionally releasing the stored electrical energy.

(5) In above item (4), preferably the drive control device further comprises an electricity storage device controller, and the electricity storage device controller controls charging/discharging of the electricity storage device to ensure storage of at least an electrical energy quantity needed to assist torque of the engine, an electrical energy quantity needed to suppress a variation during switching from the second traveling drive device to the first traveling drive device, and a charge/discharge quantity of the traveling regenerative electrical energy, into the electricity storage device.

(6) In item (1), the driving-force switching means preferably includes a traveling drive device select switch, and the traveling drive device select switch, when manually operated, stops switching between the first traveling drive device and the second traveling drive device and conducts any one of traveling operation based upon the first traveling drive device only, and traveling operation based upon the second traveling drive device only.

### Effects of the Invention

In accordance with the present invention, the hybrid traveling drive control device for a working vehicle equipped with a hydraulic working implement on a front section of the vehicle such as a wheel loader, a traveling drive device using a torque converter, and a traveling drive device using an electric motor, makes the hybrid traveling drive control device substantially free of the variation in motive power, even during the switching of the traveling drive devices, and provides high-efficiency characteristics.

### Brief Description of the Drawings

Fig. 1 is a system block diagram showing a hybrid drive system configuration for a working vehicle, the system applying a drive control device according to a first embodiment of the present invention;
Fig. 2 is a block diagram showing a configuration of the drive control device according to the first embodiment of the present invention;
Fig. 3 is a characteristics diagram of first and second traveling drive devices drivingly controlled by the drive control device according to the first embodiment of the present invention;
Fig. 4 is a block diagram showing a configuration of driving-force switching means which switches the traveling drive devices via the drive control device according to the first embodiment of the present invention;
Fig. 5 is a diagram illustrating why and how torque varies during the switching of the traveling drive devices via the drive control device according to the first embodiment of the present invention;
Fig. 6 is a block diagram showing a configuration of a variation compensator used in the traveling drive control devices according to the first embodiment of the present invention;
Fig. 7 is a timing chart that shows operation of the variation compensator used in the traveling drive control devices according to the first embodiment of the present invention;
Fig. 8 is a system block diagram showing a hybrid drive system configuration for a working vehicle, the system applying a drive control device according to a second embodiment of the present invention;
Fig. 9 is an explanatory diagram that shows a breakdown of capacitor electrical energy usage in the hybrid drive system applying the drive control device according to the second embodiment of the present invention; and
Fig. 10 is a block diagram showing a configuration of driving-force switching means which switches traveling drive devices via a drive control device according to a third embodiment of the present invention.

### Modes for Carrying Out the Invention

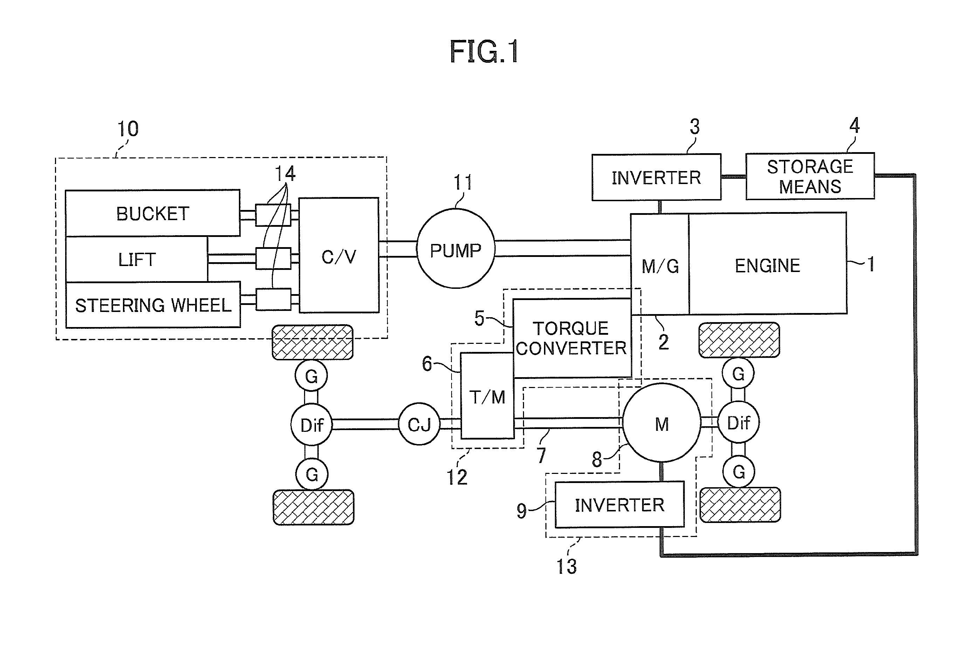

Hereunder, a configuration and operation of a drive control device for a working vehicle, in a first embodiment of the present invention, will be described using Figs. 1 to 7.
First, the hybrid drive system configuration for the working vehicle, applying the drive control device according to the present embodiment, is described below using Fig. 1.
Fig. 1 is a system block diagram showing the hybrid drive system configuration for the working vehicle, the system applying the drive control device according to the first embodiment of the present invention.

The following describes the configuration of the drive system as applied to a wheel loader as an example of a working vehicle in the present embodiment.

Motive power of an engine 1 is transmitted from a torque converter 5 and a transmission (T/M) 6 through an output shaft (propeller shaft) 7 to tires, and thus the vehicle travels. The torque converter 5 and the transmission (T/M) 6 constitutes a first traveling drive device 12.

An electric motor 8 for driving the traveling of the vehicle is installed on the output shaft (propeller shaft) 7. The motor 8 is an induction motor, for example. The motor 8 can instead be a synchronous motor.

The engine 1 has a motor/generator (M/G) 2 coupled to its output shaft. The motor/generator (M/G) 2 usually operates as a generator. Alternating-current power that the motor/generator (M/G) 2 outputs is converted into direct-current power by an inverter 3 and then stored into electricity storage means 4.

The electricity storage device 4 here can be a device of a large capacity, such as a secondary battery. The present embodiment, however, envisages a capacitor of a large capacity (electrical double-layer capacitor) allowing for a mounting space requirement, related costs, a charging/discharging response speed, and other factors. The double-layer capacitor is also relatively large in capacity with respect to an ordinary capacitor, so the electric power stored within the electricity storage device 4 can be used for a certain degree of electrical work (say, nearly several tens of kilowatts of work per several seconds). However, since the double-layer capacitor is of a small capacity relative to that of a large-capacity secondary battery, the DC power that the inverter 3 outputs is converted back into AC power by another inverter 13 and then used to drive the motor 8. That is to say, the motor 8 is driven by the output power of the motor/generator (M/G) 2 driven by the engine 1. The inverter 13 and motor 8 here constitute a second traveling drive device.

Vehicle traveling uses a traveling parallel type of hybrid traveling device system that switches the first traveling drive device driven by the torque converter 5 plus the T/M 6, and the second traveling drive device driven by the motor 8.

The wheel loader here includes a front hydraulic working implement 10 that excavates soil/sediments and carries the excavated material as a load, and a main pump 11 that supplies a hydraulic fluid to the hydraulic working implement 10. The wheel loader conducts the appropriate work according to particular requirements, by operating a hydraulic cylinder 14 constructed in the hydraulic working implement 10. The main pump 11 is driven by the engine 1.

The inverter 3 converts the electric power stored within the electricity storage means 4, into AC power. The motor/generator (M/T) 2, driven by the AC power, is also used to make the vehicle travel and drive the main pump 11 via the torque converter 5 and the T/M 6.

In addition, a DC-DC converter (chopper) is provided at an input/output section of the electricity storage means 4. The DC-DC converter (chopper) will be described later herein.

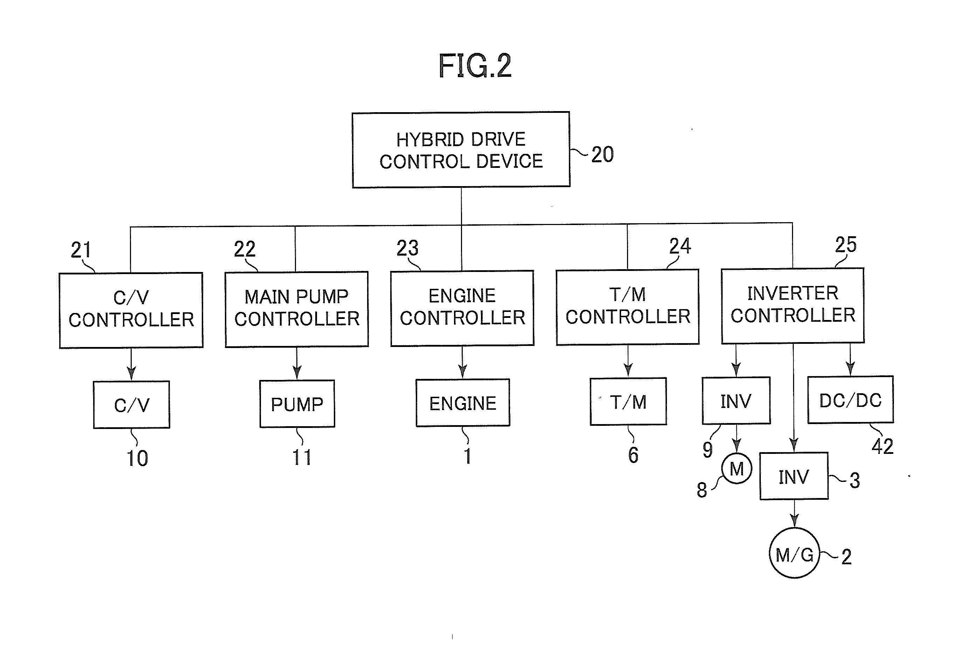

Next, the configuration of the drive control device for the working vehicle, in the first embodiment of the present invention, is described below using Fig. 2.
Fig. 2 is a block diagram showing the configuration of the drive control device for the working vehicle, in the first embodiment of the present invention. In the figure, the same reference numbers as used in Fig. 1 denote the same elements.

The drive control device 20 is a section that undertakes total control of the drive system shown in Fig. 1. The drive control device 20, positioned at a higher level than any other controllers including a control valve (C/V) controller 21, main pump controller 22, engine controller 23, a T/M controller 24, and inverter controller 25, controls the entire system, giving more specific operating commands to each of the controllers 21 to 25 so that the entire system operates at its maximum achievable performance.

The control valve (C/V) controller 21 controls a control valve (C/V) 10, which is shown in Fig. 1. The main pump controller 22 controls the main pump 11 shown in Fig. 1. The engine controller 23 controls the engine 1 shown in Fig. 1. The T/M controller 24 controls the transmission (T/M) 6 shown in Fig. 1. The inverter controller 25 controls the inverters 3, 9 and DC-DC converter (chopper) 42 shown in Fig. 1. The inverter controller 25 includes an integrated set of controllers for the motor/generator (M/G) 2 and the motor 8, but may include these controllers independently.

Communication between the drive control device 20 and the controllers 21 to 25 generally uses a CAN. Additionally, each controller does not always need to be separate from the other controllers and may have at least two control functions of one certain controller.

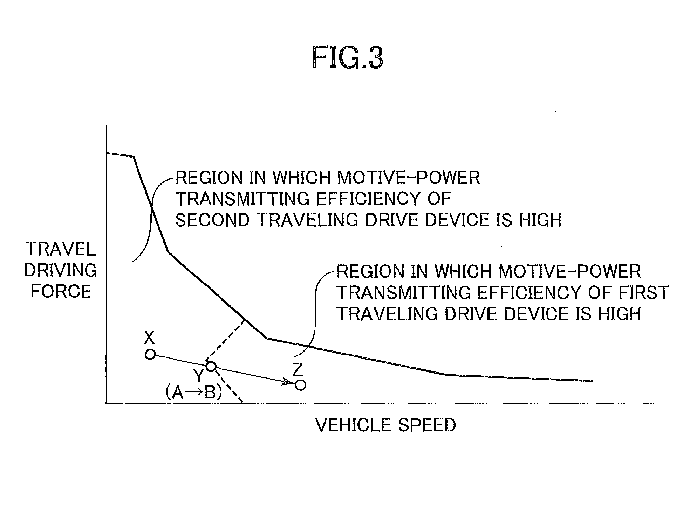

Next, characteristics of the first and second traveling drive devices 12 and 13 drivingly controlled by the drive control device for the working vehicle, in the first embodiment of the present invention, are described below using Fig. 3.
Fig. 3 is a characteristics diagram of the first and second traveling drive devices drivingly controlled by the drive control device according to the first embodiment of the present invention.

In the present embodiment, under the control device configuration as shown in Fig. 2, the drive device for the working vehicle is controlled to cause the vehicle to travel. In fact, the first traveling drive device 12 constituted by the torque converter 5 and the T/M 6 has a characteristic that motive-power transmitting efficiency of the traveling drive device varies according to a particular operating point of the device. The transmitting efficiency herein referred to is defined as efficiency at which the motive power that the engine generates is transmitted to wheels. In general, transmitting efficiency of torque converters tends to remain relatively low in low-speed traveling drive regions and improve only in high-speed traveling drive regions. In high-speed traveling regions, in particular, torque converters lock up and can be mechanically coupled, which in turn enables driving at considerably high transmitting efficiency.

In contrast to this, the second traveling drive device 13, constituted by a combination of the M/G 2 and the inverter 3 and a combination of the motor 8 and the inverter 9, electrically transmits motive power, so the transmitting efficiency characteristics of the drive device 13 take a uniform distribution that is not too variant, independently of an operating point of traveling.

The two traveling drive devices, therefore, tend to reverse in magnitude of transmitting efficiency, depending upon the operating point of traveling. Accordingly, if this characteristic that the magnitude of transmitting efficiency reverses is utilized to selectively determine which of the traveling drive devices is to be used, this allows highly efficient transmission of motive power in virtually all traveling regions.

Fig. 3 shows schematically the characteristics relating to the magnitude of transmitting efficiency of the traveling drive devices. A horizontal axis in Fig. 3 denotes a speed of the vehicle, and a vertical axis denotes travel driving force of the vehicle.

According to the diagram of Fig. 3, at vehicle speeds higher than a certain speed shown as a dotted line in the figure, the transmitting efficiency of the first traveling drive device surpasses that of the second traveling drive device. Conversely at vehicle speeds lower than the particular speed, the transmitting efficiency of the second traveling drive device surpasses that of the first traveling drive device. These characteristics, albeit insignificantly different between individual drive devices, are much the same in a large majority of drives. The vehicle speed at which the two traveling drive devices reverse in the magnitude of transmitting efficiency is also a factor that changes according to machine model, and is not clearly determinable. Before selecting the appropriate traveling drive device according to the particular travel operating point of the vehicle, therefore, it is necessary to acquire appropriate characteristics relating to the transmitting efficiency of the two traveling drive devices, and store the characteristics into the control device.

For example, if the vehicle speed starts increasing from a traveling state at an operating point X and then this operating point changes to Z, there is a need, at an operating point Y intersecting with the dotted line, to switch an operating point A of the second traveling drive device 13 to an operating point B of the first traveling drive device 12. The vehicle speed and the driving force of traveling are the same at the operating points A and B. However, the operating point A is an operating point of traveling by the second traveling drive device 13, and the operating point B is an operating point of traveling by the first traveling drive device 12.

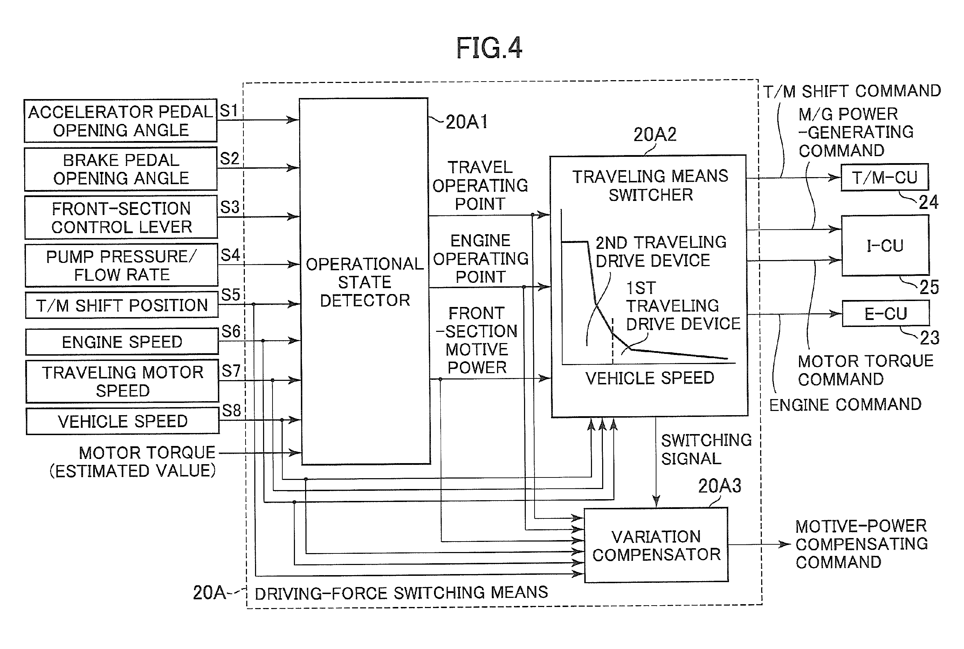

A method of switching between the traveling drive devices by the drive control device for the working vehicle, in the first embodiment of the present invention, is described below using Fig. 4.
Fig. 4 is a block diagram showing a configuration of driving-force switching means which switches the traveling drive devices via the drive control device according to the first embodiment of the present invention. In the figure, the same reference numbers as used in Fig. 2 denote the same elements.

The driving-force switching means 20A that switches the traveling drive devices is constructed inside the drive control device 20 shown in Fig. 1. The driving-force switching means 20A is composed mainly of an operational state detector 20A1, a traveling means switcher 20A2, and a variation compensator 20A3.

The operational state detector 20A1 receives accelerator pedal-opening angle information from an accelerator pedal-opening angle sensor S1, brake-pedaling quantity information from a brake pedal-opening angle sensor S2, front-lever control position information from a front-lever position sensor S3, and pump pressure and pump flow rate information from a pump pressure/flow sensor S4. The detector 20A1 also receives information on a shift position of the transmission (T/M) 6, from a T/M shift position sensor S5, engine speed information from an engine speed sensor S6, information on a rotational speed of the traveling motor 9, from a traveling motor speed sensor S7, and vehicle speed information from a vehicle speed sensor S8. The detector 20A1 additionally receives estimated motor torque information from the drive control device 20.

The operational state detector 20A1 computes a current travel operating point of the vehicle (i.e., the vehicle speed and driving force), an operating point of the engine, and motive power of the front section (hydraulic working implement), from the input information that the detector 20A1 has received. After that, the detector 20A1 outputs computation results to the traveling means switcher 20A2 and the variation compensator 20A3.

The traveling means switcher 20A2 selects the traveling drive device higher in motive-power transmitting efficiency, depending upon the received information relating to the travel operating point. At this time, ideally the switcher 20A2 operates as follows. That is to say, for switching from the first traveling drive device (torque converter + T/M) to the second traveling drive device (motor), the switcher specifies a neutral position using a T/M shift command so as to prevent an output from the torque converter 5 from being transmitted to the propeller shaft 7. This makes the vehicle output a driving force necessary for traveling driven by the motor 8 only. Conversely for switching from the second traveling drive device (motor) to the first traveling drive device (torque converter + T/M), the switcher selects free-running by clearing the output of the motor 8 to zero (0), and specifies a certain shift position using a T/M shift command so that the output from the torque converter 5 is transmitted to the propeller shaft 7. In this way, one of the two traveling drive devices that has higher transmitting efficiency is selected, depending upon the current travel operating point of the vehicle, and the vehicle correspondingly travels. The traveling drive system capable of providing more efficient driving in a wider operating range of vehicle traveling can thus be supplied.

In addition, the traveling means switcher 20A2 outputs the appropriate T/M torque command according to the received information relating to the travel operating point, the operating point of the engine, and the motive power of the front section, to the T/M controller 24, outputs an M/G-based electric-power generating command and a motor torque command to the inverter controller 25, and outputs an engine command to the engine controller 23.

If no consideration is paid to any variations in motive power of various sections during drive switching, the above process can be used to switch the drive means between the first traveling drive device and the second traveling drive device. In view of actual wheel loader operation, however, since during traveling driven by the second traveling drive device, or the motor, the front working implement uses the hydraulic system, in most cases, to perform work, switching to the first traveling drive device in order to transmit motive power to the torque converter is likely to cause significant variations in traveling motive power due to impacts of the torque converter's torque characteristics.

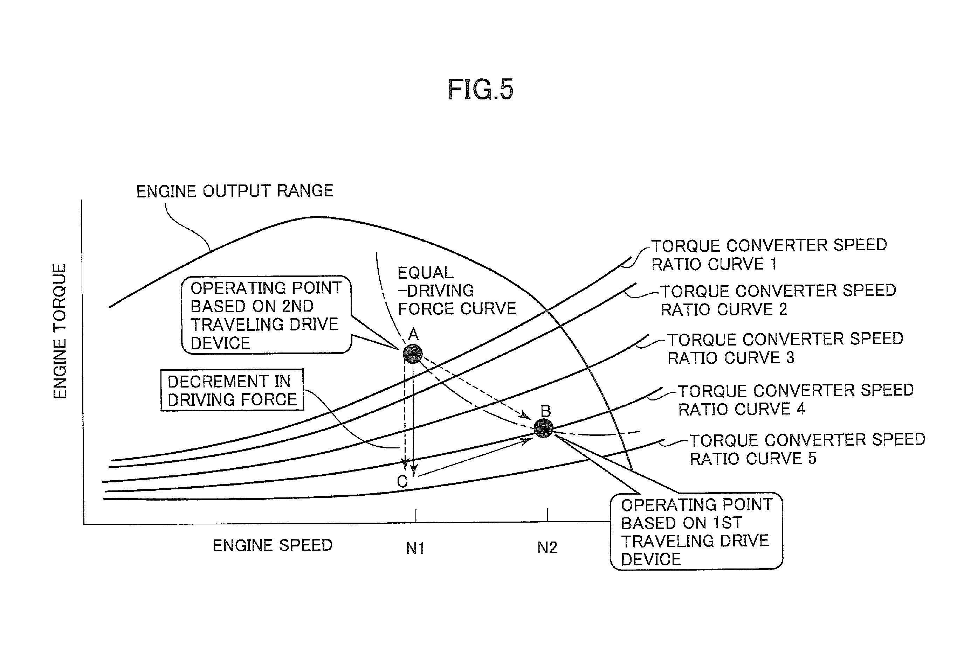

Why and how torque varies during the switching of the traveling drive devices via the drive control device according to the first embodiment of the present invention is described below using Fig. 5.
Fig. 5 is a diagram illustrating why and how torque varies during the switching of the traveling drive devices via the drive control device according to the first embodiment of the present invention.

Fig. 5 represents a relationship between an engine output range and the torque characteristics of the torque converter with respect to an input/output speed ratio thereof. Torque converter speed ratio curves 1 to 5 in Fig. 5 denote variations in output torque according to the particular input/output speed ratio of the torque converter. The torque converter speed ratio curves 1 to 5 indicate that the speed ratio tends to decrease in numerical order of the curve.

Fig. 5 assumes that the vehicle is driven at the operating point A using the second traveling drive device (motor) and that an operating point at which an equal driving force of traveling is obtained when the drive is switched from the operating point A to the first traveling drive device (torque converter + T/M) is the operating point B shown on the torque converter speed ratio curve 4. A dashed line in Fig. 5 denotes an equal-driving force curve. For example, when the drive is switched from the operating point A of the second traveling drive device to the first traveling drive device and the first traveling drive device uses the torque converter speed ratio curve 4, a point at which the torque converter speed curve 4 and the equal-driving force curve passing through the operating point A intersect is the operating point B.

During switching from the operating point A of the first traveling drive device to the operating point B of the second traveling drive device, if the engine speed at the operating point A is expressed as N1 and the engine speed at the operating point B is expressed as N2, when the torque converter is connected as a motive-power transmitting path at the operating point A, the output torque will be determined by the torque converter speed ratio obtained at the time of switching. The torque output of the torque converter will therefore decrease to a level corresponding to the same engine speed as achieved at the operating point A. An operating point corresponding to this torque level is shown as C in Fig. 5. If the decrease in traveling motive power occurs, the vehicle will slow down and be unable to obtain desired acceleration performance.

In order to compensate for the decrease in traveling torque, therefore, when the traveling drive devices are switched, the motor 8 is operated for continued output of the torque which has decreased, that is, the output of the motor 8 is not reduced to 0 immediately after switching. The torque output from the motor 8 is made to decrease progressively as the output torque of the torque converter increases. Additionally, the engine speed needs to be raised towards the operating point B and when required acceleration cannot be obtained only with the shaft torque that the engine 1 develops, the M/G 2 also needs to be used to assist engine shaft acceleration.

Using both of the motor 8 and the M/G 2 in this way to compensate for the variations in traveling motive power and engine speed during the switching of the traveling drive devices allows smooth switching from the second traveling drive device to the first traveling drive device.

The variation compensator 20A3 of the driving-force switching means 20A conducts the variation compensation during the switching of the traveling drive devices. During the switching of the traveling drive devices, the variation compensator 20A3 in Fig. 4 outputs a motive-power compensating command based upon the transmission (T/M) shift position information from the T/M shift position sensor S5, the engine speed information from the engine speed sensor S6, the vehicle speed information from the vehicle speed sensor S8, and the current vehicle travel operating point (vehicle speed, driving force), engine operating point, and front-section motive power that the operational state detector 20A1 outputs.

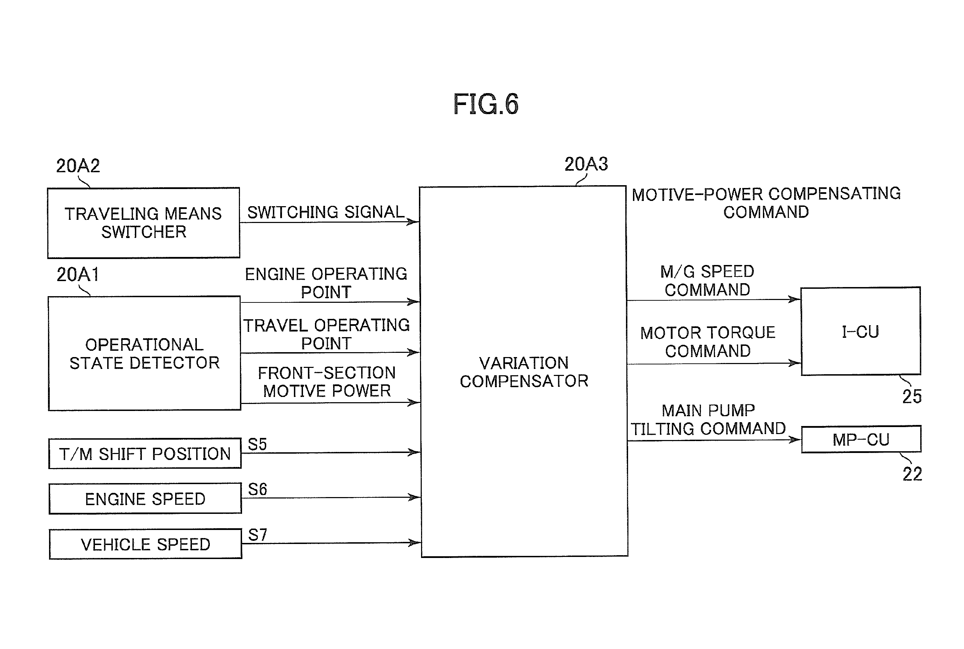

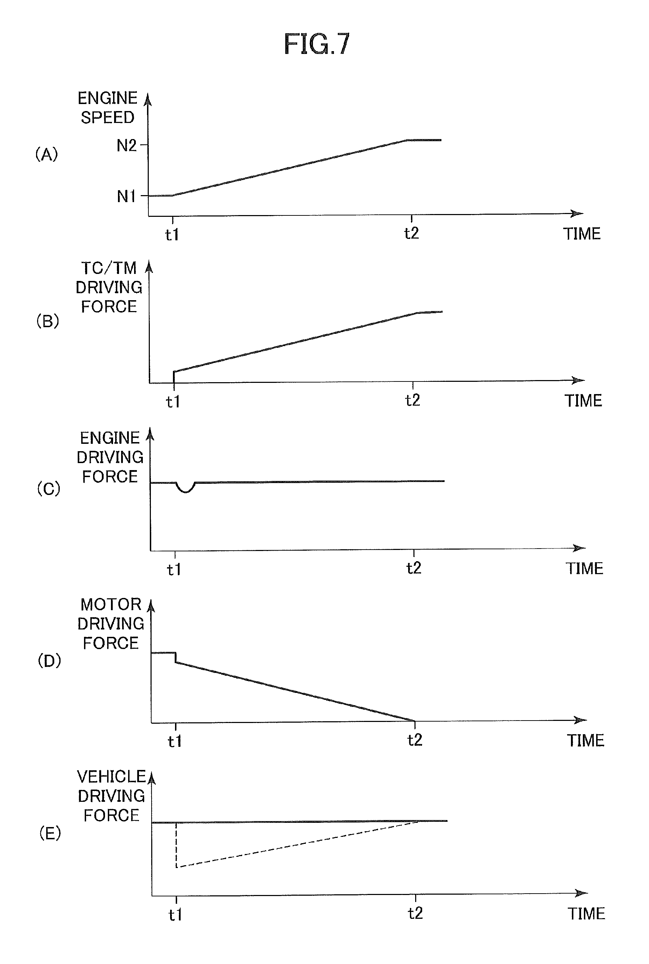

Next, a configuration and operation of the variation compensator 20A3 used in the drive control device for the working vehicle, in the first embodiment of the present invention, will be described using Figs. 6 and 7.
Fig. 6 is a block diagram showing the configuration of the variation compensator used in the traveling drive control devices according to the first embodiment of the present invention. In the figure, the same reference numbers as used in Figs. 2 and 4 denote the same elements. Fig. 7 is a timing chart that shows the operation of the variation compensator used in the traveling drive control devices according to the first embodiment of the present invention.

After receiving a switching signal from the traveling means switcher 20A2, the variation compensator 20A3 receives the T/M shift position information, the engine speed information, and the vehicle speed information. The variation compensator 20A3 next estimates the torque that the torque converter outputs after switching, and then outputs the torque command of the motor 8 that is a difference between the estimated value and the torque that the operational state detector 20A1 has computed, the latter torque value corresponding to the operating point of traveling.

At this time, computation results on the operating point of traveling and on the motive power of the front hydraulic working implement 10, by the operational state detector 20A1, are also input to the variation compensator 20A3. The variation compensator 20A3 then determines the after-switching engine operating point and gives a speed command to the M/G 2 with that engine speed as a target value. This command activates the M/G 2 as a motor and rapidly boosts the motor speed, thereby assisting an increase in the rotational speed of the engine 1 coupled to the M/G 2.

In addition, the variation compensator 20A3 outputs a tilting command for the main pump 11 in appropriate timing in response to the operating point of the engine and the motive power of the front hydraulic working implement 10. That is to say, when the engine speed changes during switching from the operating point A to the operating point B, a resulting change in a flow rate of the pump 11 causes a change in hydraulic fluid pressure, thus resulting in, for example, the working implement 10 changing in position. For example, if a swash plate type of pump is used as the pump 11, a constant hydraulic fluid pressure is maintained by changing a tilt angle of the swash plate to prevent the fluid pressure from fluctuating.

The above motive-power compensation is repeated until switching has been determined to be completed upon the engine operating point reaching a desired operating point (the operating point B in Fig. 3).

A horizontal axis in Fig. 7 denotes time. Section (A) of Fig. 7 indicates the rotational speed of the engine 1, section (B) of Fig. 7 indicates a driving force of the torque converter 5 and transmission 6, and section (C) of Fig. 7 indicates a driving force of the engine 1. Section (D) of Fig. 7 indicates a driving force of the motor 8, and section (E) of Fig. 7 indicates a driving force exerted upon the entire vehicle.

At time of the day, "t1", of Fig. 7, when the switching command is issued from the operating point A of the first traveling drive device to the operating point B of the second traveling drive device, the traveling means switcher 20A2 outputs the engine command to the engine controller 23. At the time "t1", the engine speed takes a value of N1, as shown in section (A) of Fig. 7. This value gradually increases and at time "t2", reaches N2.

At this time, as shown in section (B) of Fig. 7, the driving force of the torque converter 5 and transmission 6 occurs stepwise, at the time "t1," by an action of the torque converter 5 and then increases with increases in the engine speed shown in section (A) of Fig. 7.

Conversely, the change from the operating point A to the operating point C, described in Fig. 3, temporarily reduces the driving force of the engine, as shown in section (C) of Fig. 7.

At the same time, however, as shown in section (D) of Fig. 7, the driving force of the motor 8 is generated, thereby assisting the driving force of the vehicle.

A solid line in section (E) of Fig. 7 denotes the driving force of the entire vehicle as variation-compensated according to the present embodiment. A discontinuous line, on the other hand, denotes the driving force of the entire vehicle existing before being variation-compensated. As shown in section (B) of Fig. 7, the decrease in engine speed reduces the driving force of the entire vehicle. In contrast, as shown in section (D) of Fig. 7, at the time "t1", the driving force of the motor 8 is reduced stepwise in response to the stepwise increases in the driving force of the torque converter 5, shown in section (B) of Fig. 7. After that, in response to the increases in engine speed that are shown in section (A) of Fig. 7, as the driving force of the torque converter 5 increases, as shown in section (B) of Fig. 7, the driving force of the motor 8 is further reduced. This, as denoted by the solid line in section (E) of Fig. 7, keeps the driving force of the entire vehicle constant, even during the switching of the operating points at the "t1" to t2" time.

In this way, since the motor compensates for the variation in torque converter output torque and since the M/G assists engine acceleration, the variation in motive power during the switching of the traveling drive devices is removed and smooth switching is implemented.
The above description concerns a method of compensating for the variation in motive power during switching from the second traveling drive device to the first traveling drive device. Conversely for switching from the first traveling drive device to the second traveling drive device, it is only necessary to control the output torque of the motor 8 to be free from variations, since the motor 6 is very fast in electrical response to mechanical operation.

As set forth above, the present embodiment controls motive power to be virtually invariant, even during the switching of the traveling drive devices, while at the same time providing high efficiency.

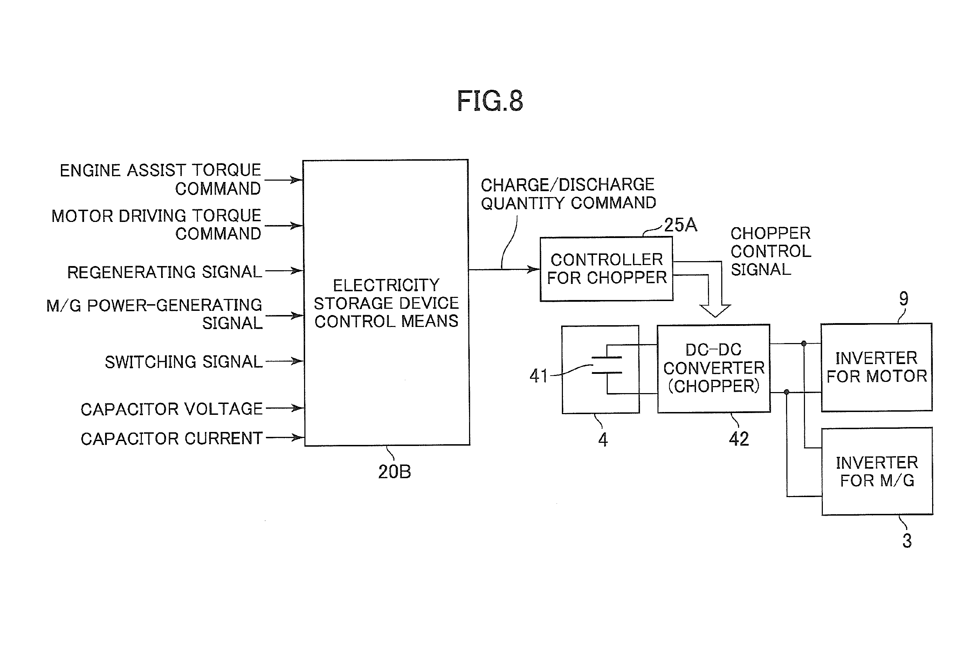

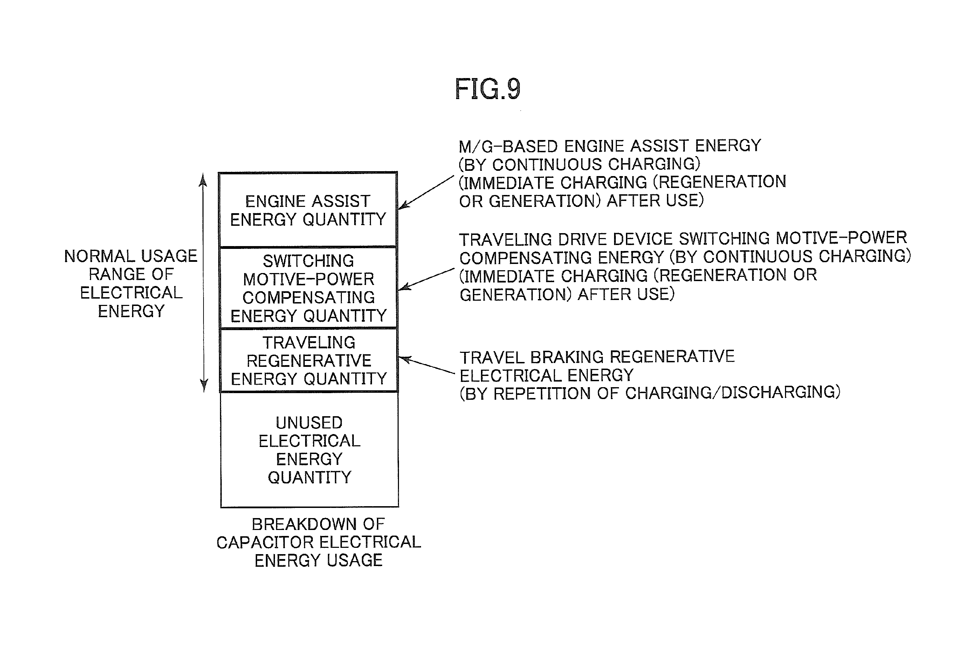

Next, a configuration and operation of a drive control device for a working vehicle, in a second embodiment of the present invention, is described below using Figs. 8 and 9. A hybrid drive system configuration for the working vehicle, applying the drive control device according to the present embodiment, is substantially the same as that shown in Fig. 1. The drive control device configuration for the working vehicle, in the present embodiment, is also substantially the same as that shown in Fig. 2. Additionally, a configuration of driving-force switching means which switches traveling drive devices via the drive control device according to the present embodiment is substantially the same as that shown in Fig. 4.

Fig. 8 is a system block diagram showing the hybrid drive system configuration for the working vehicle, the system applying the drive control device according to the second embodiment of the present invention. Fig. 9 is an explanatory diagram that shows a breakdown of capacitor electrical energy usage in the hybrid drive system applying the drive control device according to the second embodiment of the present invention. In the figures, the same reference numbers as used in Figs. 1 and 4 denote the same elements.

Additionally, in the present embodiment, electrical energy of an electricity storage device is used for instantaneous control of a motor 8 and an M/G 2 during the switching of the traveling drive devices, described in the first embodiment. The drive control device of the present embodiment is targeted for two hybrid traveling drive devices of a traveling parallel type. Switching between the hybrid traveling drive devices is conducted by a device whose section relating to traveling is driven by a torque converter plus an M/G, and a device whose section relating to traveling is driven by a motor.

In addition to the M/G 2 coupled to the engine 1 to generate electric power, the present embodiment uses the electricity storage device 4 as the power supply for driving the motor 8. While a device of a large capacity, such as a secondary battery, can be applied as the electricity storage device 4, a capacitor of a large capacity (electrical double-layer capacitor) is used in consideration of a mounting space requirement, related costs, a charging/discharging response speed, and other factors. The double-layer capacitor is also relatively large in capacity with respect to an ordinary capacitor, so the electric power stored within the electricity storage device 4 can be used for a certain degree of electrical work (say, nearly several tens of kilowatts of work per several seconds). Here, as described in the first embodiment, the electricity storage device 4 needs to have a substantial amount of electrical energy stored therein to enable the system to drive the motor 8 and the M/G 2 and compensate for decreases in motive power, during the switching of the traveling drive devices.

In addition, when the working vehicle is hybridized, the engine usually tends to be downsized, and thus when the vehicle travels during hydraulic work such as excavation, the motive power generated only by the engine 1 is likely to run short, so the vehicle needs to assist engine torque by using the M/G 2 coupled to the engine 1.

In such a case, the electricity storage device 4 also needs to have a substantial amount of electrical energy, as during the switching of the traveling drive devices. Furthermore, when the traveling section of the working vehicle is motor-powered, there is a need to recover vehicle-braking regenerative electric power with the electricity storage device and use the recovered power unwastefully to drive the motor. Charge/discharge operation with the regenerative electrical energy is likely to be always repeated with each vehicle start and stop. In contrast to this, the variation compensation during traveling-drive device switching, and an engine torque assist mode are operation modes that do not occur too frequently.

The charge/discharge control scheme for the electricity storage device, therefore, enables electrical energy (or power) to be managed and controlled for an appropriate quantity of charge/discharge by dividing the electrical energy or power into regenerative electric power that frequently repeats charging/discharging, and the power used for the variation compensation and engine assist modes in infrequent switching applications.

For such control of the electricity storage device 4, electricity storage device control means 20B is provided inside the drive control device 20.

Fig. 8 shows a configuration of the electricity storage device control means 20B. An electrical double-layer capacitor 41 of a large capacity is used as the electricity storage device 4. The capacitor 41 here is voltage-controlled by the DC-DC converter (chopper) 42, thereby conducting the DC-power charge/discharge operation upon the inverter 9 for the motor and the inverter 3 for the M/G. However, the charge/discharge of the capacitor 41 does not occur if the power that the M/G 2 has generated is consumed directly by the motor 8 to drive this motor or if the power that the motor 8 has regenerated is consumed directly by the M/G 2 to drive this M/G.

Fig. 8 further assumes that a chopper controller 25A for controlling the charge/discharge of the DC-DC converter (chopper) 42, and although not shown, controllers for the motor inverter 3 and the M/G inverter 9 are mounted in the lump in an inverter controller 25 shown in Fig. 2.

As shown in Fig. 8, the electricity storage device control means 20B, upon receiving an engine assist torque command, a motor-driving torque command, a regenerating signal, an M/G power-generating signal, and a switching signal from traveling means switcher 20A2, computes the power to be charged into/discharged from the capacitor 41, and outputs a charging/discharging command to the inverter controller 25. The inverter controller 25 then uses the received charging/discharging command to drive the DC-DC converter (chopper) 42. The mode in which the internal power of the capacitor 41 is to be used at this time is any one of the three modes mentioned above, namely, either engine assist, or traveling-drive device switching compensation, or regenerated-power charging/discharging. Since the three modes are each irregular in timing and frequency of occurrence, it is effective to always control the respective quantities of electrical energy independently.

Fig. 9 shows the breakdown of the electrical energy usage in the capacitor 41. The quantity of electrical energy for the engine torque assist mode, the quantity of electrical energy for traveling-drive device switching compensation, and the quantity of electrical energy for traveling regenerative electric power charging/discharging are independently controlled assuming that a capacity of a low voltage region of the capacitor 41 cannot be used. Of the three kinds, the quantity of electrical energy for the engine torque assist mode and the quantity of electrical energy for traveling-drive device switching compensation are used at all times to charge the capacitor 41, and the use of the electrical energy is immediately followed by either power generation by the M/G 2 or charging by regenerative electrical energy to prepare for next usage. In contrast, the traveling regenerative electrical energy is, basically, generated during vehicle starts and stops cyclically, which assumes that this electrical-energy quantity portion is charged or discharged with each start or stop.

As can be seen from the above, capacitor power is used with regards to the hybrid drive device of the working vehicle. For the working vehicle, the operation mode that uses the motor and M/G added for hybridizing the vehicle is almost determined and using the electricity storage device control means allows hybrid operation to be stably continued without a disturbance in electric power balance.

As described above, in accordance with the present embodiment, motive power is controlled to be virtually invariant, even during the switching of the traveling drive devices, and high-efficiency characteristics are provided.

Instantaneous use of electric motor power in applications including the switching of the hybrid drive devices can also be achieved without disturbing the electric power balance.

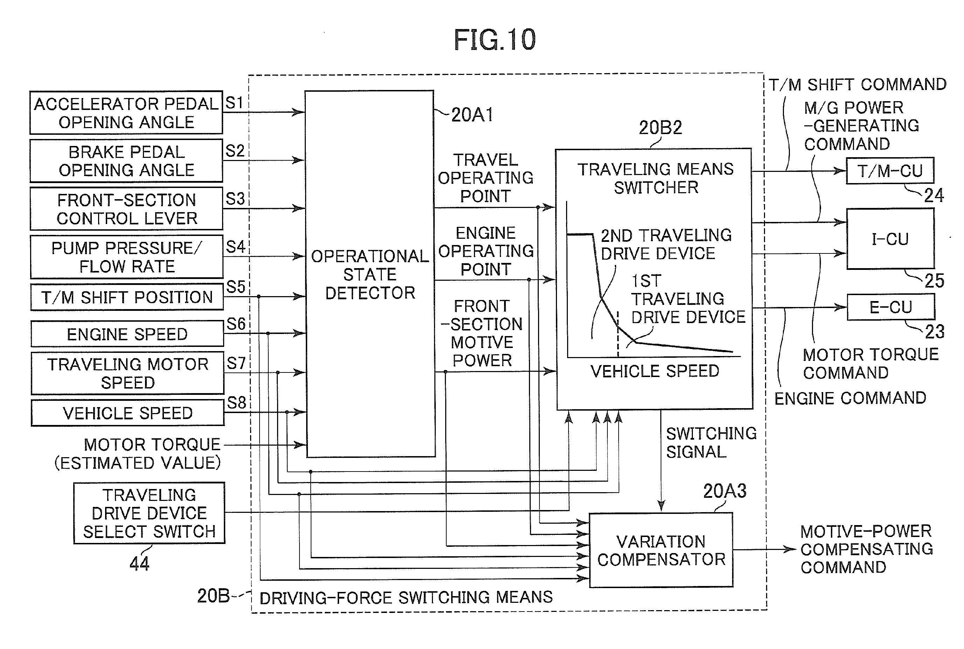

Next, a configuration and operation of a drive control device for a working vehicle, in a third embodiment of the present invention, is described below using Fig. 10. A hybrid drive system configuration for the working vehicle, applying the drive control device according to the present embodiment, is substantially the same as that shown in Fig. 1. The drive control device configuration for the working vehicle, in the present embodiment, is also substantially the same as that shown in Fig. 2.

Fig. 10 is a block diagram showing a configuration of driving-force switching means which switches traveling drive devices via the drive control device for the working vehicle, in the third embodiment of the present invention. The same reference numbers as used in Fig. 4 denote the same elements.

In the present embodiment, a traveling drive device select switch 44 that an operator can operate is provided in addition to the constituent elements shown in Fig. 4. In the embodiment described using Fig. 4, the traveling drive devices are switching-controlled by the driving-force switching means 20A automatically.

In the present embodiment, operating the traveling drive device select switch 44 allows a traveling means switcher 20B2 to stop the switching of the traveling drive devices and continue the traveling operation only with a first traveling drive device 12, or the traveling operation only with a second traveling drive device 12. With these functional additions, the operator can select an optimal traveling drive device according to traveling state or traveling environment.

In addition, obviously, controllers monitor abnormal states of both traveling drive devices whenever necessary, so if one of the traveling drive devices becomes abnormal, traveling with the other traveling drive device that is determined to be normal can be continued.

Furthermore, if an electricity storage device 4 is left uncharged for a time, its load state may cause the storage device 4 to discharge progressively, and thus an electric power shortage is considered to occur in a situation that requires electric power. Even in this situation, since electricity storage device control means 20B detects a capacitor voltage in appropriate timing, prior supplementary charging is implemented using a charging command issued from the electricity storage device control means 20B.

As described above, in accordance with the present embodiment, motive power is controlled to be virtually invariant, even during the switching of the traveling drive devices, and high-efficiency characteristics are provided.

Additionally, the switching of the traveling drive devices can be stopped manually.

### Description of Reference Characters

- 1: Engine
- 2: M/G
- 4: Electricity storage means
- 3, 9: Inverters
- 5: Torque converter
- 6: Transmission
- 8: Motor
- 10: Hydraulic working implement
- 11: Hydraulic pump
- 12: First traveling drive device
- 13: Second traveling drive device
- 14: Hydraulic cylinder
- 20: Drive control device
- 20A: Driving-force switching means
- 20A1: Operational state detector
- 20A2: Traveling means switcher
- 20A3: Variation compensator
- 20B: Capacitor charge quantity control means
- 21: Control valve (C/V) controller
- 22: Main pump controller
- 23: Engine controller
- 24: T/M controller
- 25: Inverter controller
- 25A: Controller for chopper
- 41: Capacitor
- 42: DC-DC converter
- 44: Traveling drive device select switch

## Claims

1. A drive control device used for a working vehicle including an engine, an electric power generator driven by the engine, a hydraulic pump driven by the engine and serving as a driving source for a hydraulic working implement provided on a front section of the vehicle, a first traveling drive device for transmitting motive power of the engine to a driving wheel via a torque converter and a transmission so as to make the vehicle travel, and a second traveling drive device for driving an electric motor by means of the generator-output electrical energy and then transmitting motive power of the motor to the driving wheel so as to make the vehicle travel, the drive control device comprising:
driving-force switching means for switching a driving force between the first traveling drive device and the second traveling drive device,
wherein the driving-force switching means includes a traveling means switcher for selecting, depending upon a traveling speed of the vehicle, one of the two traveling drive devices so as to make the vehicle travel while being driven in a high-speed region with the first traveling drive device and in a low-speed region with the second traveling drive device.

2. The drive control device according to claim 1, wherein:
when the traveling means switcher conducts switching from the second traveling drive device to the first traveling drive device, the switcher uses the electric power generator to control at least a rotational speed of the engine, torque of the motor, and a flow rate of a fluid from the hydraulic pump, for suppressed variations in the rotational speed of the engine, in travel driving force of the working vehicle, and in driving force of the working implement.

3. The drive control device according to claim 2, wherein:
the driving-force switching means further includes an operational state detector;
the operational state detector detects a current operating point of travel driving, operating point of the engine, and motive power of the working implement, based upon information relating to at least an accelerator pedal opening angle, a brake pedal opening angle, a control lever actuating quantity for the working implement, a pressure and flow rate of the fluid from the hydraulic pump, a rotational speed of the engine, a rotational speed and torque of the motor, and the speed of the vehicle.

4. The drive control device according to claim 1, wherein:
the driving-force switching means further includes a variation compensator;
when switching from the second traveling drive device to the first traveling drive device takes place, the variation compensator estimates a variation in torque that occurs between the two traveling drive devices during the switching, gives the torque variation as a torque command targeted for the motor, and reduces the torque command in asymptotic form, and zeroes the torque command after a predefined time.

5. The drive control device according to claim 1, further comprising:
an electricity storage device for storage of traveling regenerative electrical energy output from the motor, as well as the electrical energy output from the electric power generator; the storage device optionally releasing the stored electrical energy.

6. The drive control device according to claim 5, further comprising:
an electricity storage device controller,
wherein the electricity storage means controller controls charging/discharging of the electricity storage device to ensure storage of at least an electrical energy quantity needed to assist torque of the engine, an electrical energy quantity needed to suppress a variation during switching from the second traveling drive device to the first traveling drive device, and a charge/discharge quantity of the traveling regenerative electrical energy, into the electricity storage device.

7. The drive control device according to claim 1, wherein:
the driving-force switching means includes a traveling drive device select switch;
the traveling drive device select switch, when manually operated, stops switching between the first traveling drive device and the second traveling drive device, and conducts any one of traveling operation based upon the first traveling drive device only, and traveling operation based upon the second traveling drive device only.

## Amended claims

### Amended claims under Art. 19.1 PCT

**1.** (After amendment) A drive control device used for a working vehicle including an engine, an electric power generator driven by the engine, a hydraulic pump driven by the engine and serving as a driving source for a hydraulic working implement provided on a front section of the vehicle, a first traveling drive device for transmitting motive power of the engine to a driving wheel via a torque converter and a transmission so as to make the vehicle travel, and a second traveling drive device for driving an electric motor by means of the generator-output electrical energy and then transmitting motive power of the motor to the driving wheel so as to make the vehicle travel, the drive control device comprising:
driving-force switching means for switching a driving force between the first traveling drive device and the second traveling drive device; wherein:
the driving-force switching means includes a traveling means switcher for selecting, depending upon a traveling speed of the vehicle, one of the two traveling drive devices so as to make the vehicle travel while being driven in a high-speed region with the first traveling drive device and in a low-speed region with the second traveling drive device;
when the traveling means switcher conducts switching from the second traveling drive device to the first traveling drive device, the switcher uses the electric power generator to control at least a rotational speed of the engine, torque of the motor, and a flow rate of a fluid from the hydraulic pump so as to suppress variations in the rotational speed of the engine, in travel driving force of the working vehicle, and in driving force of the working implement.

**2.** Cancelled.

**3.** (After amendment) The drive control device according to claim 1, wherein:
the driving-force switching means further includes an operational state detector;
the operational state detector detects a current operating point of travel driving, operating point of the engine, and motive power of the working implement, based upon information relating to at least an accelerator pedal opening angle, a brake pedal opening angle, a control lever actuating quantity for the working implement, a pressure and flow rate of the fluid from the hydraulic pump, a rotational speed of the engine, a rotational speed and torque of the motor, and the speed of the vehicle.

**4.** The drive control device according to claim 1, wherein:
the driving-force switching means further includes a variation compensator;
when switching from the second traveling drive device to the first traveling drive device takes place, the variation compensator estimates a variation in torque that occurs between the two traveling drive devices during the switching, gives the torque variation as a torque command targeted for the motor, and reduces the torque command in asymptotic form, and zeroes the torque command after a predefined time.

**5.** The drive control device according to claim 1, further comprising:
an electricity storage device for storage of traveling regenerative electrical energy output from the motor, as well as the electrical energy output from the electric power generator; the storage device optionally releasing the stored electrical energy.

**6.** (After amendment) The drive control device according to claim 5, further comprising:
an electricity storage device controller,
wherein the electricity storage device controller controls charging/discharging of the electricity storage device to ensure storage of at least an electrical energy quantity needed to assist torque of the engine, an electrical energy quantity needed to suppress a variation during switching from the second traveling drive device to the first traveling drive device, and a charge/discharge quantity of the traveling regenerative electrical energy, into the electricity storage device.

**7.** The drive control device according to claim 1, wherein:
the driving-force switching means includes a switching ON/OFF switch;
the switching ON/OFF switch, when manually operated, stops switching between the first traveling drive device and the second traveling drive device, and conducts any one of traveling operation based upon the first traveling drive device only, and traveling operation based upon the second traveling drive device only.

Claim 1 has been amended to add requirements relating to initial/original claim 2 of the application.
Cited documents 1 to 3 do not disclose information on the requirements relating to initial/original claim 2 of the application.

Claim 2 has been cancelled.

Claim 3 has been amended to depend from claim 1.

Claim 6, containing a clerical error of "the electricity storage means controller", has been amended to match the wording to the "electricity storage device controller" that precedes.
